# EUROPEAN PATENT SPECIFICATION

(11) **EP 2 267 297 B1**
(45) Date of publication and mention of the grant of the patent: **23.08.2017**
(21) Application number: 10165225.3
(22) Date of filing: 08.06.2010
(51) Int. Cl.: F03D 7/04, F03D 13/25

(54) **Floating offshore wind turbine**
Schwimmende Offshore-Windturbine
Éolienne flottante en pleine mer

(30) Priority: 24.06.2009 JP 2009149812
(43) Date of publication of application: 29.12.2010
(73) Proprietor: Hitachi, Ltd., Chiyoda-ku Tokyo 100-8280 (JP)
(72) Inventor: Yoshida, Shigeo, Tokyo 160-8316 (JP)
(74) Representative: MERH-IP Matias Erny Reichl Hoffmann Patentanwälte PartG mbB

(56) References cited:
- EP-A1- 2 221 474
- WO-A1-2007/009464
- WO-A1-2009/064737
- WO-A2-2008/044066
- JP-A- 2004 251 139
- JP-A- 2007 331 414

## Description

### BACKGROUND OF THE INVENTION

### 1. Field of the Invention

The present invention relates to floating offshore wind turbines, and more particularly to a control of relative positions of a plurality of wind turbines.

### 2. Description of the Related Art

As is well known floating wind turbines are on the ocean for wind power generation. A floating offshore wind turbine is supported in a floating state on the ocean by buoyancy of a floating body provided at a base end of the turbine. The floating offshore wind turbine is generally moored by tying one end of a mooring cable to the floating body and fixing the other end to the sea bottom or the like with an anchor.

Japanese Patent Application Laid-open Publications JP-A-2004-251 139 (FIG. 5) and JP-A-2004-176 626 describe floating offshore wind turbine systems including a plurality of wind turbines. WO2009/064737 A1 discloses an offshore wind farm having a plurality of floating bodies, each supporting a wind turbine, connected to the seabed and between themselves, so that the distance between floating bodies is increased in the wind prevailing direction and shading effects between wind turbines are minimized.

WO2007/009464 A1 discloses an offshore wind plant comprising a floating structure supporting a plurality of wind turbines. Mooring systems connect the structure to the seabed and allow for rotating the complete wind plant in order to position the wind turbines in an optimal way according to the wind direction. However, within the framework of the aforementioned conventional technologies, the relative positions of the plurality of wind turbines cannot be controlled.

When a group of floating offshore wind turbines is constituted by a plurality of wind turbines, some of the rotors of the wind turbines on a leeward side may enter the wake flow of rotors of wind turbines on a windward side due to variations in a wind direction, resulting in a decrease in the amount of power generated.

Further, fatigue damage is accumulated in the wind turbines on the leeward side due to deformation or deflection of load applied to the wind turbines on the leeward side. These problems become especially significant on the ocean where the effect of wake flow is difficult to attenuate because of a low turbulence intensity.

### SUMMARY OF THE INVENTION

The present invention has been created to solve the aforementioned problems inherent to conventional technologies, and it is an object of the present invention to increase the amount of work of rotors, such as the amount of power generated, and reduce fatigue damage in floating offshore wind turbines.

In order to solve the above-described problems a floating offshore wind turbine according to a first aspect of the present invention comprises:
a floating body;
a plurality of wind turbines supported by the floating body and having a rotor arranged on the ocean;
an anemoscope;
a movable mooring mechanism that is capable of mooring the wind turbines on the ocean while maintaining relative positions of the wind turbines and is also capable of changing the relative positions of the wind turbines, and
a control device that controls a drive of the movable mooring mechanism on the basis of a wind direction measured by the anemoscope and controls to change the relative positions of the wind turbines so that a total number of rotors that enters a wake flow of another rotor decreases.

A second aspect of the present invention provides a floating offshore wind turbine, wherein the movable mooring mechanism comprises a drive device that changes the relative positions of the wind turbines by moving the floating body.

A third aspect of the present invention provides a floating offshore wind turbine, wherein the movable mooring mechanism comprises a mooring cable locked to the floating body and a drive device that moves the floating body by changing a tension of the mooring cable.

A fourth aspect of the present invention provides a floating offshore wind turbine, wherein the plurality of wind turbines are individually supported by floating bodies, and the drive device is provided on all or at least one of the floating bodies.

A fifth aspect of the present invention provides a floating offshore wind turbine, wherein two or more wind turbines are supported by a single floating body, and the drive device causes the single floating body to yaw.

According to the present invention, in a floating offshore wind turbine provided with a plurality of wind turbines, the drive of the movable mooring mechanism is controlled on the basis of a wind direction measured by an anemoscope and the relative positions of the wind turbines are changed and controlled so that a total number of rotors entering a wake flow of another rotor decreases.

Therefore, the degree of interference of a wake flow of rotors of the wind turbines on a windward side with rotors of the wind turbines on the leeward side can be decreased, the amount of work of the rotors for all of the plurality of wind turbines can be increased, and fatigue damage can be reduced.

### BRIEF DESCRIPTION OF THE DRAWINGS

- FIG. 1: is a schematic front view of a single wind turbine constituting the floating offshore wind turbine according to a first embodiment of the present invention;
- FIG. 2: is a detailed view of a portion **B** shown in FIG. 1;
- FIG. 3: is a reference table of a control target position in the floating offshore wind turbine according to a first embodiment of the present invention;
- FIG. 4: is a control flowchart for the floating offshore wind turbine according to the first embodiment of the present invention;
- FIG. 5: is a layout view showing a floating offshore wind turbine of a 3 × 3 configuration, wherein the **C** column relates to a floating offshore wind turbine according to the first embodiment of the present invention;
- FIG. 6: is a layout view showing from above a floating offshore wind turbine of a 3 × 3 configuration, wherein the **C** column relates to a floating offshore wind turbine according to the first embodiment of the present invention;
- FIG. 7: is a layout view showing from above a floating offshore wind turbine of a 3 × 3 configuration, wherein the C column relates to a floating offshore wind turbine according to the first embodiment of the present invention;
- FIG. 8: is a plan view of a floating offshore wind turbine according to a second embodiment of the present invention; and
- FIG. 9: is a layout view showing from above a floating offshore wind turbine of an equilateral triangular configuration, wherein the C column relates to a floating offshore wind turbine according to the second embodiment of the present invention.

### DESCRIPTION OF THE PREFERRED EMBODIMENTS

Embodiments of the present invention will be descried below with reference to the appended drawings. The description below merely discloses embodiments of the present invention, and the present invention is not limited thereto.

### First Embodiment

A first embodiment of the present invention is described below.

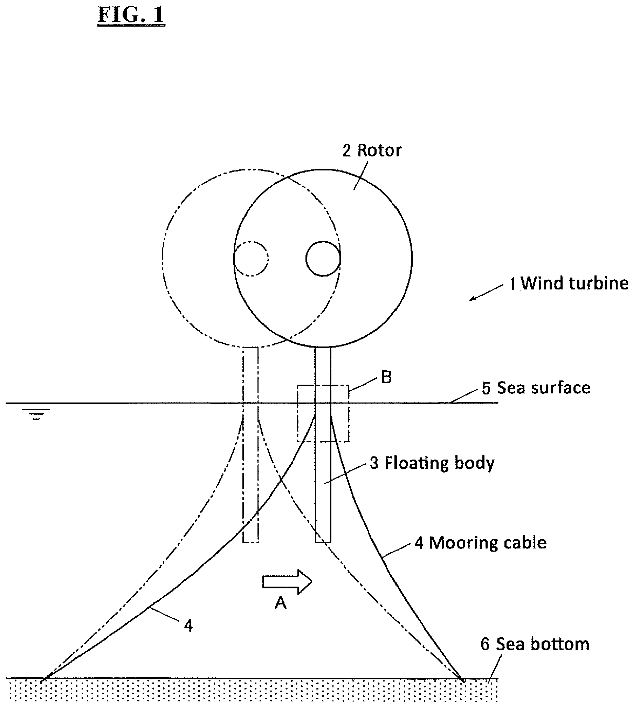

FIG. 1 shows a single wind turbine constituting the floating offshore wind turbine of the present embodiment.

A rotor 2 of a wind turbine 1 is supported by a floating body 3 and disposed on a sea surface 5. The floating body 3 in the present embodiment is a columnar floating body.

The wind turbine 1 is installed with a power generator driven by the rotation of the rotor 2 and is constituted as a wind power generator. The wind turbine 1 is provided with an anemoscope (not shown in the figure). The wind turbine 1 employs a well-known configuration in which a yaw angle of the rotor 2 is controlled, and the rotor 2 is positioned opposing to the wind.

The wind turbine 1 is retained by a mooring cable 4. One end of the mooring cable 4 is fixed by anchoring to a sea bottom 6, and the other end is connected to the wind turbine 1.

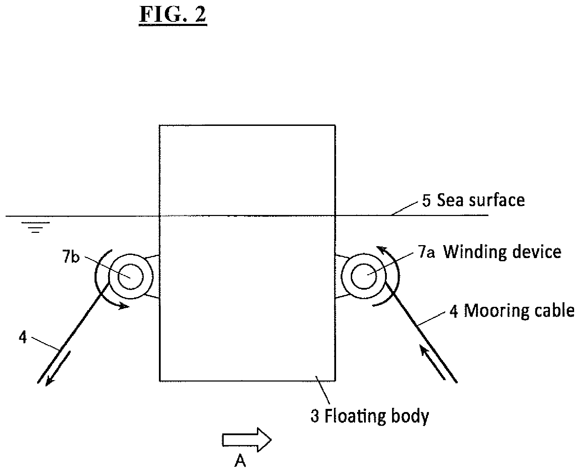

FIG. 2 is a detailed view of the connection portion. As shown in FIG. 2, the end of the mooring cable 4 that is connected to the wind turbine 1 is wound on a winding device 7 fixed to the floating body 3. The winding device 7 is used as a drive device that changes the tension of the mooring cable 4.

A movable mooring mechanism is constituted by the mooring cable 4 and the winding device 7. For example, as shown in FIG. 2, the wind turbine 1 can be moved in the direction A by winding one mooring cable 4 by one winding device 7a and unwinding another mooring cable 4 by another winding device 7b.

In the present embodiment, four sets of such mooring cables 4 and winding devices 7 for winding the mooring cables are used and disposed at four sides. As a result, the wind turbine 1 can be moved in the front-rear and left-right (east-west and south-north) directions.

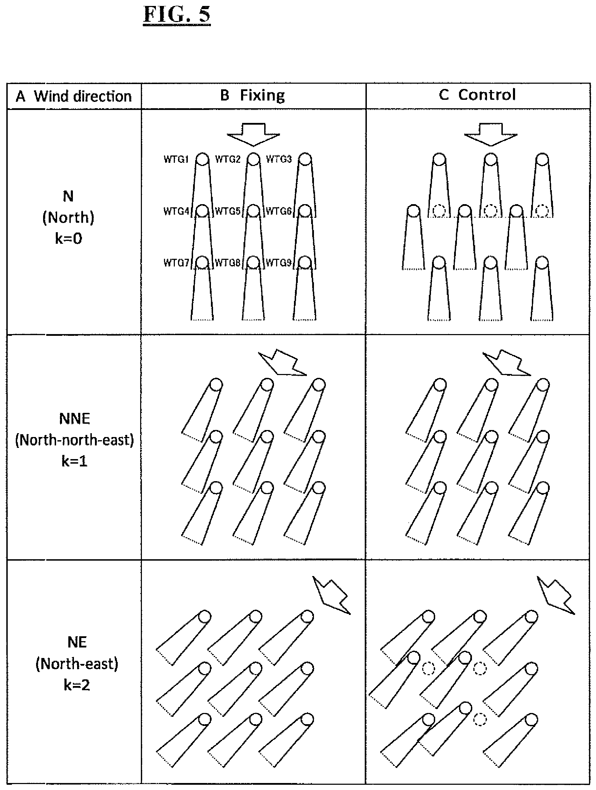

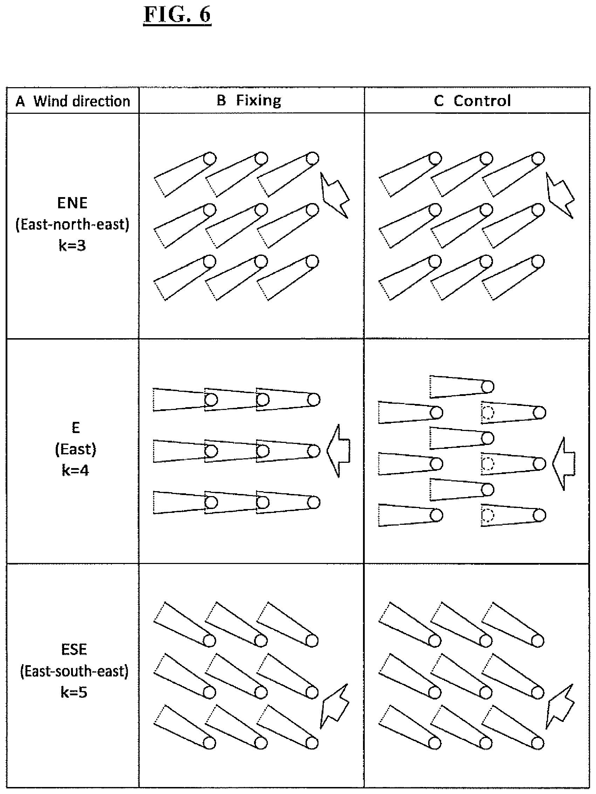

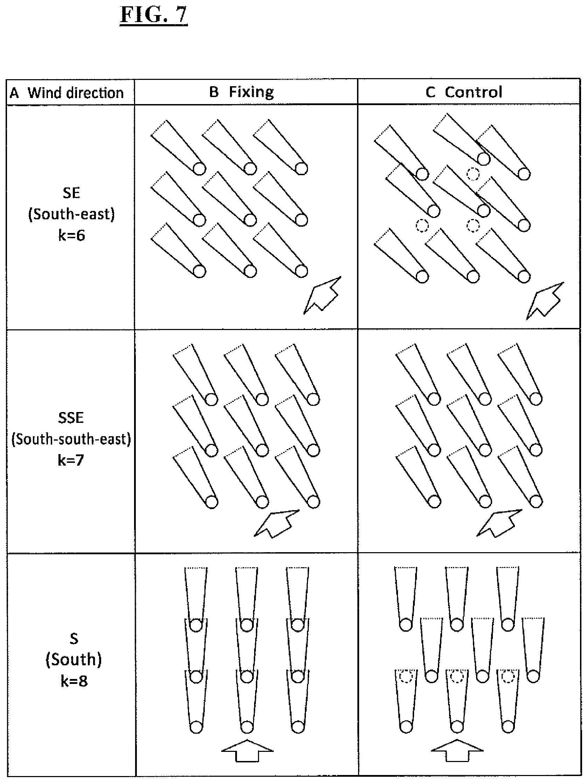

The floating offshore wind turbine of the present embodiment has nine wind turbines 1. These nine wind turbines 1 are disposed as a 3 × 3 square as shown in FIGs. 5 to 7. In order to distinguish these wind turbines from each other, reference symbols WTG1 to WTG9 are assigned, as shown in the uppermost row of column B in FIG. 5. In FIGs. 5 to 7, a circle denotes a rotor and a broom-shaped portion extending from the circle denotes a wake flow of the rotor.

The floating offshore wind turbine of the present embodiment has a control device that changes and controls the relative positions of the wind turbines WTG1 to WTG9.

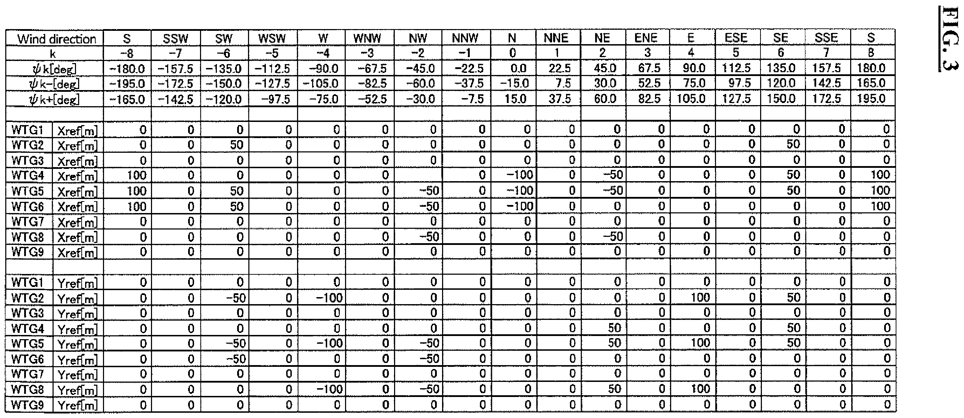

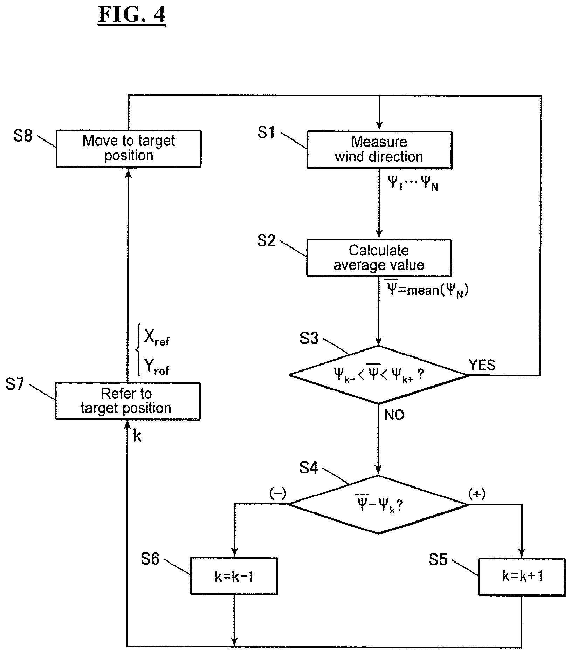

Data of a reference table of a control target position shown in FIG. 3 are stored in a memory of the control device, and the control device executes a control program having a flow shown in FIG. 4.

The control program executed by the control device will be explained below. Prerequisites for the control program are an arrangement spacing of the wind turbines wind WTG1 to WTG9 of 200 m and a rotor diameter of 80 m.

Firstly, the reference table shown in FIG. 3 will be explained. The azimuth orientation is uniformly divided into 16 directions of North (N), North-North-East (NNE), North-East (NE), ..., South-South-East (SSE), South (S), South-South-West (SSW), ..., North-West (NW), and North-North-West (NNW).

An algebraic factor k is introduced and k values -8, -7, -6, ..., -1, 0, 1, ..., 6, 7, 8 are allocated to the 16 azimuth orientations as shown in FIG. 3 to regulate the control contents.

A central value of each of 16 azimuth orientations is denoted by ψk. As a result, the central value ψk corresponding to each k value becomes such as shown in FIG. 3. A lower threshold ψk- and an upper threshold ψk+ for activating the control operation are introduced by taking the central value ψk as a center.

When the central value ψk - 15° is taken as a lower threshold value ψk-, and the central value ψk + 15° is taken as an upper threshold value ψk+, the values corresponding to each k value are such as shown in FIG. 3.

In the 3 × 3 wind turbine configuration shown in FIGS. 5 to 7, a horizontal coordinate (West to East coordinate) is taken as X, a vertical coordinate (South to North coordinate) is taken as Y, and control target positions (Xref, Yref) of the wind turbines WTG1 to WTG9 corresponding to respective k values are such as shown in FIG. 3.

The control device stores one k value and, as shown in FIG. 4, acquires measured values from an anemoscope mounted on the wind turbines WTG1 to WTG9 at each predetermined time interval (step S1), calculates an average value thereof (step S2), and monitors whether not this average value deviates from the lower threshold value ψk- or upper threshold value ψk+ (step S3).

When the result obtained in step S3 is NO, the control device subtracts the central value ψk from the average value and determines whether the sign of the result is positive (+) or negative (-) (step S4).

When the result in step S4 is positive (+), the k value is updated by adding one (step S5). When the result is negative (-), the k value is updated by subtracting one (step S6). Then a control target position (Xref, Yref) in the reference table (FIG. 3) corresponding to the updated k value is referred to (step S7).

The control device then drives the winding device 7 of a wind turbine among the wind turbines WTG1 to WTG9, the present position of which is different from the reference control target position, and moves the wind turbine to the control target position (Xref, Yref) (step S8).

The relative positions of the wind turbines WTG1 to WTG9 are thus changed in a mode shown in columns **C** in FIGs. 5 to 7 correspondingly to the wind direction shown in columns **A** by controlling the positions of the wind turbines WTG1 to WTG9 according to the above-described control rule and the reference table shown in FIG. 3. For comparison, columns **B** in FIGS. 5 to 7 illustrate a case in which the turbines are fixed in a 3 × 3 square configuration. Arrows shown in columns **B** and **C** represent a wind direction shown in columns **A.**

For example, the case in FIG. 5 in which the azimuth orientation is N and k = 0 is explained. In the fixing case shown in column **B,** the rotors of six wind turbines WTG4 to WTG9 enter the wake flow of the rotors of other windward turbines, whereas in the embodiment in accordance with the present invention shown in column C, the positions of three wind turbines WTG4, WTG 5 and WTG6 in the middle row are moved to the left (W) by 100 m, thereby reducing the total number of wind turbines among the six wind turbines WTG4 to WTG9 which enter the wake flow of other rotors.

For another example, the case shown in FIG. 5, in which the azimuth orientation is NE and k = 2, is explained. In the fixing case shown in column **B,** the rotors of four wind turbines WTG4, WTG 5, WTG 7, and WTG 8 enter the wake flow of the rotors of other windward turbines, whereas in the embodiment in accordance with the present invention that is shown in column **C,** three wind turbines WTG 4, WTG 5 and WTG 8 are moved to the position of (-50, 50) [m], thereby reducing the total number of wind turbines among the six turbines WTG4 to WTG9 which enter the wake flow of other rotors.

Even if only one certain wind turbine is focused and moved to avoid the wake flow of the windward turbines, a leeward turbine may enter the wake flow of this wind turbine. No total effect is obtained unless the number of the rotors which successfully avoid entering the wake flow is increased.

Therefore, the present control device changes and controls the relative positions of the wind turbines so that the total number of rotors which enter the wake flows of another rotor decreases.

In the present embodiment, the anemoscope is mounted on each wind turbine and measured values of all the wind meters are used to calculate an average value thereof. However, the control may also be conducted on the basis of a measured value of a representative meter.

Further, it is also possible not to provide the winding device 7 for the wind turbines WTG1, WTG 3, WTG 7, and WTG 9. In other words, the mooring cable 4 may be fixed directly to the floating body 3, without using the movable mooring mechanism.

In the present embodiment, nine wind turbines are arranged in a 3 × 3 configuration, but this is merely an example and any number of wind turbines in the columns and rows may be employed.

### Second Embodiment

The second embodiment of the present invention will be described below.

In the first embodiment, the plurality of wind turbines are supported individually by floating bodies and a drive device is provided for all or some of the floating bodies. On the other hand, in a floating offshore wind turbine of the present embodiment, two or more wind turbines are supported by a single floating body, and a drive device causes the single floating body to yaw.

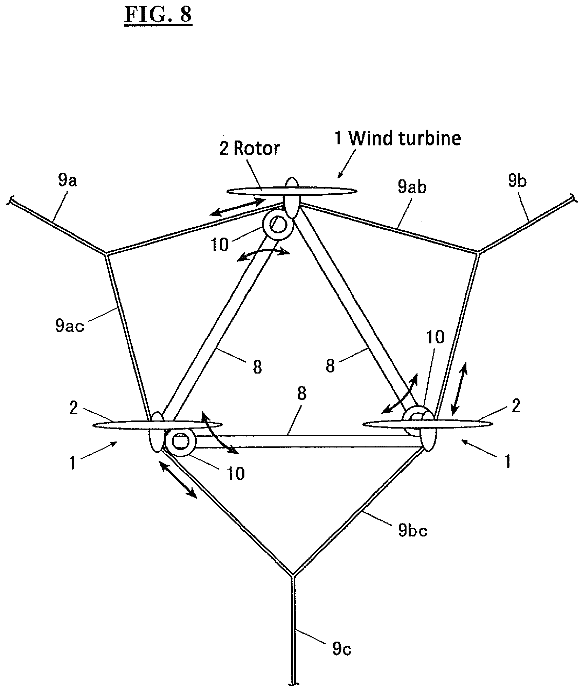

As shown in FIG. 8, in the present embodiment a floating offshore wind turbine is provided with three wind turbines 1, and three rotors 2 are provided on the wind turbines 1 respectively.

The floating offshore wind turbine of the present embodiment includes a floating body 8 assembled in a regular triangular configuration when viewed from above, and mooring cables 9. The wind turbines 1 are installed in a standing manner at the corner portions of the triangular floating body 8.

As shown in FIG. 8, the mooring cable 9 is configured to have a structure in which three mooring cables 9a, 9b and 9c fixed with anchors respectively at three sides of the floating body 8 extend in the direction of the floating body 8, are branched in two directions, and linked together. Portions that connect two neighboring branching points are denoted as mooring cables 9ab, 9bc, 9ac. A pulley 10 is installed in each corner portion of the triangular floating body 8.

The floating body 8 and the wind turbines 1 thereon are moored by locking the mooring cables 9ab, 9bc and 9ac to respective pulleys 10. A rotation drive device is installed at one or more of three blocks, and the floating body 8 is caused to yaw by winding a mooring cable extending to one side of the pulley 10 and unwinding a mooring cable extending to the opposite side. As a result, the relative positions of the three wind turbines 1 are changed and controlled.

In the present embodiment, the drive of the movable mooring mechanism is also controlled on the basis of a wind direction measured by an anemoscope and the relative positions of the wind turbines are changed and controlled so as to reduce the degree at which the rotors enter the wake flows of other rotors by using a control device similar to that of the first embodiment.

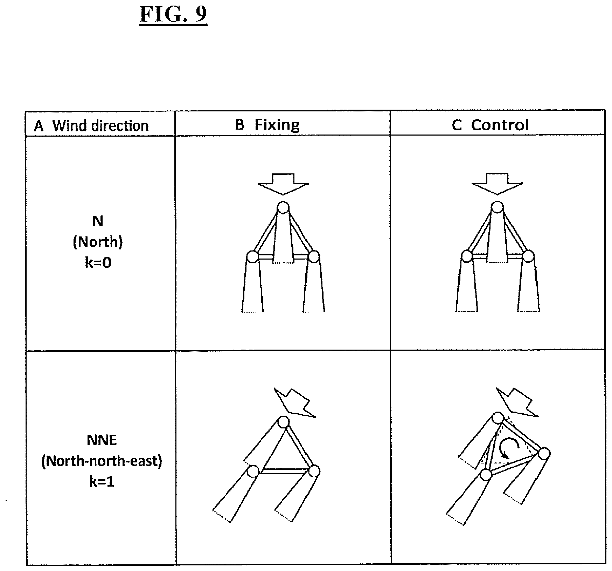

FIG. 9 shows some of control results.

As shown in FIG. 9, when the azimuth orientation n is NNE and k = 1, in the fixing case shown in column **B,** the rotor of one wind turbine enters the wake flow of the rotor of another windward turbine, whereas in the embodiment in accordance with the present invention that is shown in column **C,** the floating body yaws, whereby the total number of the rotors which enter the wake flows of other rotors is reduced.

A reference table regulating the yaw angle of the floating body that reduces the number of the rotors which enter the wake flows of other rotors is created in advance for each azimuth orientation (each k value), and by conducting control similar to that of the first embodiment using this reference table, the relative positions of the wind turbines are changed and controlled so as to reduce the number of the rotors which enter the wake flows of other rotors.

The floating offshore wind turbine can be scaled up by installing multiple configurations, each including a set of three wind turbines.

### List of Reference Signs

- 1: wind turbine
- 2: rotor
- 3: floating body
- 4: mooring cable
- 5: sea surface
- 6: sea bottom
- 7: winding device
- 7a: winding device
- 7b: winding device
- 8: floating body
- 9: mooring cable
- 9a: mooring cable
- 9b: mooring cable
- 9c: mooring cable
- 9ab: mooring cable
- 9ac: mooring cable
- 9bc: mooring cable
- 10: pulley

## Claims

1. A floating offshore wind turbine system, comprising;
- a plurality of wind turbines (1) arranged on the ocean, each supported by a floating body (3) and each having a rotor (2);
- an anemoscope; and
- a movable mooring mechanism (4, 7) that is capable of mooring the wind turbines (1) on the ocean while maintaining relative positions of the wind turbines (1) and is also capable of changing the relative positions of the wind turbines (1), **characterized by**
- a control device that controls a drive of the movable mooring mechanism (4, 7) on the basis of a wind direction measured by the anemoscope and controls to change the relative positions of the wind turbines (1) so that a total number of rotors (2) which enters a wake flow of another rotor (2) decreases, wherein
- the movable mooring mechanism (4, 7) includes a plurality of mooring cables (4) locked to the floating body (3) and a plurality of winding devices (7, 7a, 7b) winding the mooring cables (4) respectively,
- the winding devices (7, 7a, 7b) being provided on all or at least one of the floating bodies (3), and the wind turbine (1) being able to be moved by winding one mooring cable (4) by one winding device (7a) and unwinding another mooring cable (4) by another winding device (7b) thereby changing the relative positions of the wind turbines (1).

2. The floating offshore wind turbine according to claim 1 or 3,
wherein the winding device (7, 10) moves the floating body (3, 8) by changing a tension of the mooring cable (4, 9).

3. A floating offshore wind turbine system, comprising;
- a single floating body (8);
- at least three wind turbines (1) arranged on the ocean, supported by said floating body (8) and each having a rotor (2);
- an anemoscope; and
- a movable mooring mechanism (9, 10) that is capable of causing the single floating body (8) to yaw;
**characterized by**
- a control device that controls a drive of the movable mooring mechanism (9, 10) on the basis of a wind direction measured by the anemoscope and controls to change the relative positions of the wind turbines (1) so that a total number of rotors (2) which enters a wake flow of another rotor (2) decreases, wherein
the movable mooring mechanism (9, 10) includes a plurality of mooring cables (9a, 9b, 9c) locked to the floating body (3) and a plurality of pulleys (10) installed at the floating body (8), respectively, and the floating body (8) is yawable by winding a mooring cable extending on one side of the pulley (10) and unwinding a mooring cable extending to the opposite side thereby changing the relative positions of the wind turbines (1),
wherein the mooring cables (9a, 9b, 9c) are branched in two directions, portions that connect two neighboring branching points are denoted as mooring cables (9ab, 9bc, 9ac) and the wind turbines (1) are moored by locking the mooring cables to respective pulleys (10).

## Patentansprüche

1. Schwimmendes Offshore-Windturbinensystem, das Folgendes umfasst:
- mehrere Windturbinen (1), die auf dem Ozean angeordnet sind und wovon jede durch einen Schwimmkörper (3) getragen wird und jede einen Rotor (2) aufweist;
- ein Anemoskop; und
- einen beweglichen Verankerungsmechanismus (4, 7), der die Windturbinen (1) auf dem Ozean verankern kann, während er die relativen Positionen der Windturbinen (1) beibehält, und der außerdem die relativen Positionen der Windturbinen (1) ändern kann, **gekennzeichnet durch**
- eine Steuervorrichtung, die einen Antrieb des beweglichen Verankerungsmechanismus (4, 7) anhand einer Windrichtung, die von dem Anemoskop gemessen wird, steuert, und die eine Änderung der relativen Positionen der Windturbinen (1) steuert, derart, dass eine Gesamtzahl von Rotoren (2), die in einen Windschatten eines anderen Rotors (2) eintreten, abnimmt, wobei
- der bewegliche Verankerungsmechanismus (4, 7) mehrere Verankerungskabel (4), die an dem Schwimmkörper (3) befestigt sind, und mehrere Wickelvorrichtungen (7, 7a, 7b), die die Verankerungskabel (4) jeweils aufwickeln, enthält,
- die Wickelvorrichtungen (7, 7a, 7b) auf allen oder mindestens einem der Schwimmkörper (3) vorgesehen sind und die Windturbine (1) durch das Aufwickeln eines Verankerungskabels (4) durch eine Wickelvorrichtung (7a) und Abwickeln eines anderen Verankerungskabels (4) durch eine andere Wickelvorrichtung (7b) bewegt werden kann, wodurch die relativen Positionen der Windturbinen (1) geändert werden.

2. Schwimmendes Offshore-Windturbinensystem nach Anspruch 1 oder 3, wobei die Wickelvorrichtung (7, 10) den Schwimmkörper (3, 8) durch Ändern einer Spannung der Verankerungskabel (4, 9) bewegt.

3. Schwimmendes Offshore-Windturbinensystem, das Folgendes umfasst:
- einen einzelnen Schwimmkörper (8);
- mindestens drei Windturbinen (1), die auf dem Ozean angeordnet sind, die von dem Schwimmkörper (8) getragen werden und jeweils einen Rotor (2) aufweisen;
- ein Anemoskop; und
- einen beweglichen Verankerungsmechanismus (9, 10), der veranlassen kann, dass der einzelne Schwimmkörper (8) eine Gierbewegung ausführt;
**gekennzeichnet durch**
- eine Steuervorrichtung, die einen Antrieb des beweglichen Verankerungsmechanismus (9, 10) auf der Grundlage einer Windrichtung, die von dem Anemoskop gemessen wird, steuert, und die die Änderung der relativen Positionen der Windturbinen (1) steuert, derart, dass eine Gesamtzahl von Rotoren (2), die in einen Windschatten eines anderen Rotors (2) eintreten, abnimmt, wobei
der bewegliche Verankerungsmechanismus (9, 10) mehrere Verankerungskabel (9a, 9b, 9c), die an dem Schwimmkörper (3) befestigt sind, und mehrere Riemenscheiben (10), die jeweils an dem Schwimmkörper (8) installiert sind, enthält und der Schwimmkörper (8) durch das Aufwickeln eines Verankerungskabels, das sich auf einer Seite der Riemenscheibe (10) erstreckt, und durch das Abwickeln eines Verankerungskabels, das sich auf der gegenüberliegenden Seite erstreckt, wodurch die relativen Positionen der Windturbine (1) geändert werden, eine Gierbewegung ausführen kann,
wobei sich die Verankerungskabel (9a, 9b, 9c) in zwei Richtungen verzweigen, wobei Abschnitte, die zwei benachbarte Verzweigungsstellen verbinden, als Verankerungskabel (9ab, 9bc, 9ac) bezeichnet werden und die Windturbinen (1) durch Befestigen der Verankerungskabel an den entsprechenden Riemenscheiben (10) verankert werden.

## Revendications

1. Système à turbine éolienne offshore flottant, comprenant :
une pluralité de turbines éoliennes (1) agencées sur l'océan, supportées chacune par un corps flottant (3) et ayant chacune un rotor (2) ;
- un anémoscope ; et
- un mécanisme d'amarrage mobile (4, 7) qui est capable d'amarrer l'turbine éolienne (1) sur l'océan tout en maintenant les positions relatives des turbines éoliennes (1) et qui est aussi capable de changer les positions relatives des turbines éoliennes (1), **caractérisé par**
- un dispositif de commande qui commande un entraînement du mécanisme d'amarrage mobile (4, 7) sur la base d'une direction du vent mesurée par l'anémoscope et qui commande pour changer les positions relatives des turbines éoliennes (1) de sorte qu'un nombre total des rotors (2) qui entrent dans le sillage d'un autre rotor (2) diminue, dans lequel
- le mécanisme d'amarrage mobile (4, 7) inclut une pluralité de câbles d'amarrage (4) attachés sur le corps flottant (3) et une pluralité de dispositifs d'enroulement (7, 7a, 7b) qui enroulent les câbles d'amarrage (4) respectivement,
- les dispositifs d'enroulement (7, 7a, 7b) sont prévus sur tous les corps flottants ou sur l'un au moins des corps flottants (3), et la turbine éolienne (1) est capable d'être déplacée en enroulant un câble d'amarrage (4) par un dispositif d'enroulement (7a) et en déroulant un autre câble d'amarrage (4) par un autre dispositif d'enroulement (7b), en changeant grâce à cela les positions relatives des turbines éoliennes (1).

2. Turbine éolienne offshore flottante selon la revendication 1 ou 3,
dans laquelle le dispositif d'enroulement (7, 10) déplace le corps flottant (3, 8) en changeant une tension du câble d'amarrage (4, 9).

3. Système à turbine éolienne offshore flottant, comprenant :
- un unique corps flottant (8) ;
- au moins trois turbines éoliennes (1) agencées sur l'océan, supportées par ledit corps flottant (8) et ayant chacune un rotor (2) ;
- un anémoscope ; et
- un mécanisme d'amarrage mobile (9,10) qui est capable d'amener l'unique corps flottant (8) à tourner ;
**caractérisé par**
- un dispositif de commande qui commande un entraînement du mécanisme d'amarrage mobile (9, 10) sur la base d'une direction du vent mesurée par l'anémoscope et qui commande pour changeur les positions relatives des turbines éoliennes (1) de telle façon qu'un nombre total des rotors (2) qui entrent dans un sillage d'un autre rotor (2) diminue, dans lequel
le mécanisme d'amarrage mobile (9, 10) inclut une pluralité de câbles d'amarrage (9a, 9b, 9c) attachés au corps flottant (3) et une pluralité de poulies (10) installées sur le corps flottant (8), respectivement, et le corps flottant (8) est capable de tourner en enroulant un câble d'amarrage s'étendant sur un côté de la poulie (10) et en déroulant un câble d'amarrage s'étendant sur le côté opposé, en changeant grâce à cela les positions relatives des turbines éoliennes (1),
dans lequel les câbles d'amarrage (9a, 9b, 9c) sont ramifiés dans deux directions, de sorte que des portions qui connectent deux points de ramification voisins sont désignées comme câbles d'amarrage (9ab, 9bc, 9ac) et les turbines éoliennes (1) sont amarrées en bloquant les câbles d'amarrage sur des poulies respectives (10).
